Europäisches Patentamt

European Patent Office

Office européen des brevets

(19)

(11) Veröffentlichungsnummer : **0 534 285 B1**

## (12) EUROPÄISCHE PATENTSCHRIFT

(45) Veröffentlichungstag der Patentschrift :
29.11.95 Patentblatt 95/48

(51) Int. Cl.⁶ : **H02M 7/48**

(21) Anmeldenummer : **92115765.7**

(22) Anmeldetag : **15.09.92**

(54) Saugkreis-Schaltungsanordnung.

(30) Priorität : **24.09.91 DE 9111924 U**

(43) Veröffentlichungstag der Anmeldung :
**31.03.93 Patentblatt 93/13**

(45) Bekanntmachung des Hinweises auf die
Patenterteilung :
**29.11.95 Patentblatt 95/48**

(84) Benannte Vertragsstaaten :
**AT CH DE LI SE**

(56) Entgegenhaltungen :
**THIRD EUROPEAN CONFERENCE ON POWER
ELECTRONICS AND APPLICATIONS EPE 89,
9. Oktober 1989, Aachen, Seiten 577-582; BA-
¨CHLE: "Requirements on the control of a
three-level four quadrant power converter in a
traction application"**

(73) Patentinhaber : **SIEMENS
AKTIENGESELLSCHAFT
Wittelsbacherplatz 2
D-80333 München (DE)**

(72) Erfinder : **Schuster, Roland, Dipl.-Ing.
Am Gemeindeweiher 17
8522 Herzogenaurach (DE)**
Erfinder : **Neubert, Rolf, Dipl.-Ing.
Lessingstrasse 10
8522 Herzogenaurach (DE)**

**Beschreibung**

Die Erfindung bezieht sich auf eine Saugkreis-Schaltungsanordnung für einen Dreipunkt-Zwischenkreis eines Spannungsumrichters, der einen eingangsseitigen Pulswechselrichter und einen ausgangsseitigen Dreipunkt-Vierquadranten-Steller aufweist, wobei zwischen zwei ersten Anschlußklemmen ein Saugkreis geschaltet ist, der aus einer in Reihe geschalteten Drossel und Kondensator besteht, wobei dieser Saugkreis auf eine doppelte Nennfrequenz eines erzeugten Einphasensystems am Ausgang des Dreipunkt-Vierquadranten-Stellers abgestimmt ist.

Die Umformung von Wechselspannungssystemen verschiedener Frequenz und Spannung wird oft mittels Zwischenkreisumrichtern durchgeführt. Im Leistungsbereich bis zu einigen MVA kam neben den Stromzwischenkreisumrichtern der Spannungszwischenkreisumrichter zum Einsatz. Dabei erfolgt die Übertragung der Leistung von einem Wechselspannungssystem zum anderen in zwei Stufen. Beispielsweise bei der Umformung eines Drehspannungssystem in ein Einphasensystem wird zunächst die dreiphasige Spannung mittels eines Pulswechselrichters in eine konstante, lastunabhängige Gleichspannung umgeformt. Diese konstante Zwischenkreis-Spannung wird anschließend mit einem Steller (Vierquadrantensteller-4QS) in eine Einphasenspannung umgeformt. Die veränderliche Spannungsamplitude und Frequenz eines Vierquadrantenstellers oder eines Pulswechselrichters wird beim Spannungszwischenkreisumrichter dadurch erreicht, daß die Ausgangsklemmen über Leistungshalbleiter an dem Zwischenkreis gemäß eines geeigneten Pulsmusters geschaltet werden. Werden nur die Plus- und Minusanschlüsse des Zwischenkreises verwendet, so spricht man von einer Zwei-Punkt-Schaltung. Bei einer Drei-Punkt-Schaltung ist zusätzlich ein Mittelpunkt des Zwischenkreises verfügbar.

Zur Erzeugung von Wechselspannungen mit stufenlos veränderlicher Amplitude und Frequenz wird die Gleichspannung des Zwischenkreises blockweise auf die Ausgangsklemmen durchgeschaltet. Man unterscheidet dabei höherpulsige Taktarten, bei dem sich eine Wechselspannungshalbschwingung aus mehreren, unterschiedlich langen Spannungsblöcken zusammensetzt und der Vollblock- oder Grundfrequenztaktung, bei der pro Halbschwingung nur ein Spannungsblock gebildet wird.

Das Durchschalten von Spannungsblöcken wird beim Spannungszwischenkreisumrichter zu einer blockförmigen Stromentnahme aus dem Zwischenkreis und demzufolge zu Spannungsschwingungen an den Stützkondensatoren dieses Zwischenkreises. Diese Spannungsschwankungen sollen 5 bis 10 % der Zwischenkreisspannung nicht überschreiten, damit die Ausgangsspannung des Spannungszwischenkreisumrichters nicht zu stark verzerrt wird. Die Einhaltung des Grenzwertes der Spannungsschwankung wurde bisher dadurch erreicht, daß ein entsprechend groß dimensionierter Zwischenkreiskondensator verwendet wurde.

Bei der Erzeugung einer einphasigen Wechselspannung fester Frequenz wird der Zwischenkreis zusätzlich mit der pendelnden Einphasenleistung, die mit doppelter Nennfrequenz schwingt, belastet. Um diese Schwingung weitgehend vom Zwischenkreiskondensator fernzuhalten, wird im Zwischenkreis ein Saugkreis verwendet, der auf die doppelte Nennfrequenz abgestimmt ist. Aufgrund von Schwankungen der Einphasenfrequenz und der Bauteiletoleranzen im Saugkreis, wird der Zwischenkreis-Kondensator entsprechend des Impedanzverhältnisses zum Saugkreis teilweise mit dieser schwingenden Leistung belastet.

Bei Spannungszwischenkreisumrichtern großer Leistung ist der Eingangssteller, der Zwischenkreis und der Ausgangssteller jeweils als Drei-Punkt-Schaltung ausgeführt. Beim Betrieb dieser Steller ist zur Minimierung der Stromrichterverluste eine möglichst niedrige Taktfrequenz anzuwenden. Der Einsatz der Vollblocktaktung ist unter diesem Aspekt ideal, da jedes Schaltelement während einer Periode nur einmal ein- und ausgeschaltet wird. Bei sehr niedrigen Einphasenfrequenzen, beispielsweise 16 2/3 Hz des Bahnnetzes, führt diese Vollblocktaktung zu hohen Welligkeiten der Zwischenkreis-Spannung. Speziell durch die halbseitige Belastung der Teilzwischenkreise der Drei-Punkt-Schaltung schwingt der Zwischenkreismittelpunkt mit der Einphasengrundfrequenz.

Um die Zwischenkreis-Spannungsschwankungen während des Betriebs möglichst klein zu halten, müßte bei der Übertragung von einigen MW pro Teilzwischenkreis die Kapazität des Kondensators wenigstens 30 mF oder größer bemessen werden. Ein wesentliches Problem bei diesen großen Zwischenkreiskapazitäten ist - bedingt auch durch den notwendigen induktivitätsarmen Aufbau - im Fehlerfall die Beherrschung der Kurzschlußströme. Um im Kurzschlußfall die mechanische Deformation der Stromschienen zu vermeiden, muß entweder eine sehr massive und aufwendige Stromschienenkonstruktion gewählt werden oder die Zwischenkreis-Kondensatoren sind wesentlich kleiner zu dimensionieren, wodurch jedoch die Spannungswelligkeit wieder ansteigt.

Der Erfindung liegt nun die Aufgabe zugrunde, eine Saugkreis-Schaltungsanordnung für einen Dreipunkt-Zwischenkreis eines eingangs genannten Spannungsumrichters anzugeben, mit der die Spannungsschwankungen, insbesondere die Mittelpunktschwingung mit Grundfrequenz, reduziert werden kann.

Diese Aufgabe wird erfindungsgemäß dadurch gelöst, daß jeweils zwischen einer ersten Anschlußklemme und einem Zwischenkreismittenanschluß ein Teilsaugkreis vorgesehen ist, der jeweils auf die einfache Nennfrequenz des erzeugten Einphasensystems abgestimmt ist.

Durch die Erweiterung des zwischen zwei ersten Anschlußklemmen geschalteten Saugkreises um zwei Teilsaugkreise erhält man eine Saugkreis-Schaltungsanordnung, die für jede Zwischenkreishälfte einen Teilsaugkreis, abgestimmt auf die einfache Nennfrequenz eines erzeugten Einphasensystems am Ausgang des Dreipunkt-Vierquadranten-Stellers des Spannungsumrichters, und für den gesamten Zwischenkreis einen Saugkreis, abgestimmt auf die doppelte Nennfrequenz des erzeugten Einphasensystems, enthält. Mittels dieser Teilsaugkreise werden die Mittelpunktschwingungen mit Grundfrequenz von den Stützkondensatoren des Dreipunkt-Zwischenkreises ferngehalten. Außerdem können dadurch die Werte der Kondensatoren dieses Zwischenkreises verkleinert werden, wodurch im Fehlerfall die Kurzschlußströme besser beherrscht werden können.

Vorteilhafte Ausführungsformen der erfindungsgemäßen Saugkreis-Schaltungsanordnung sind den Unteransprüchen 2 bis 4 zu entnehmen.

Zur weiteren Erläuterung der Erfindung wird auf die Zeichnung Bezug genommen, in der mehrere Ausführungsformen der erfindungsgemäßen Saugkreis-Schaltungsanordnung schematisch veranschaulicht sind.

| | |
|---|---|
| Figur 1 | zeigt ein Blockschaltbild eines bei statischen Netzkupplungsumformern verwendeten Spannungszwischenkreisumrichters, die |
| Figur 2 | zeigt ein Ersatzschaltbild eines Dreipunkt-Vierquadranten-Stellers mit einem eingangsseitigen Zwischenkreis mit Saugkreis, in den |
| Figuren 3 und 4 | ist jeweils in einem Diagramm über der Zeit t eine Grundfrequenztaktung einer Phase des Dreipunkt-Vierquadranten-Stellers nach Figur 2 dargestellt, die |
| Figur 5 | veranschaulicht in einem Diagramm über der Zeit t eine Ausgangsspannung des Dreipunkt-Vierquadranten-Stellers nach Figur 2, die |
| Figur 6 | zeigt eine erste Ausführungsform der erfindungsgemäßen Saugkreis-Schaltungsanordnung und in den |
| Figuren 7 und 8 | ist jeweils eine weitere Ausführungsform dieser Saugkreis-Schaltungsanordnung näher dargestellt. |

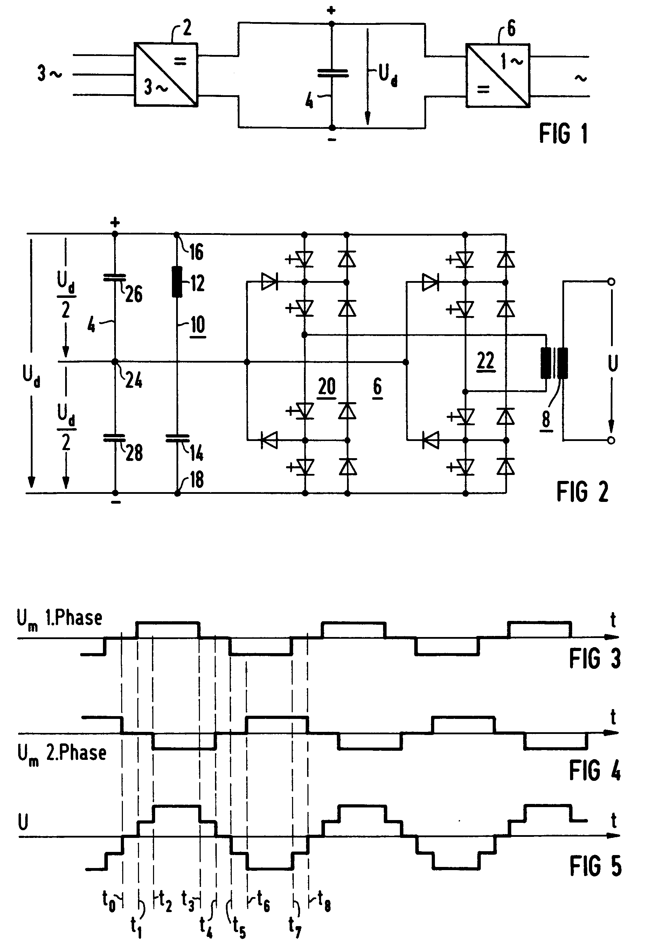

Die Figur 1 zeigt ein Blockschaltbild eines Spannungsumrichters, der aus einem Pulswechselrichter 2, einem Zwischenkreis 4 und einem Vierquadranten-Steller 6, auch 4QS genannt, besteht. Mittels dieses Spannungsumrichters werden Umformungen von Wechselspannungssystemen verschiedener Frequenz und Spannung durchgeführt. Derartige Spannungsumrichter werden auch statische Netzkupplungsumformer genannt. Im dargestellten Beispiel wird ein Drehspannungssystem mittels des Pulswechselrichters 2 in eine konstante, lastunabhängige Gleichspannung $U_d$ umgeformt. Diese konstante Zwischenkreis-Spannung $U_d$ wird anschließend mittels des Vierquadranten-Stellers 6 in eine Einphasenspannung, beispielsweise 16 2/3 Hz / 15 kV bzw. 50 Hz / 25 kV, wobei für die Spannungstransformation nicht näher dargestellte Transformatoren verwendet werden. Ebenfalls sind aus Übersichtlichkeitsgründen eine Steuer- und Regeleinrichtung für den Pulswechselrichter 2 und den Vierdranten-Steller 6 nicht dargestellt. Wie zu erkennen ist, werden nur die Plus- und Minus-Anschlüsse des Zwischenkreises 4 für die Erzeugung der Einphasenspannungen verwendet. Deshalb spricht man von einer Zweipunkt-Schaltung.

In Figur 2 ist eine Dreipunkt-Schaltung näher dargestellt, wobei aus Übersichtlichkeitsgründen nur der Zwischenkreis 4 und der Vierquadranten-Steller 6 mit ausgangsseitigem Transformator 8 näher dargestellt ist. Der Zwischenkreis 4 ist außerdem mit einem Saugkreis 10 versehen, der aus einer Reihenschaltung, bestehend aus einer Drossel 12 und einem Kondensator 14, besteht. Dieser Saugkreis 10 ist jeweils mit einer Anschlußklemme 16 bzw. 18 mit dem Plus- bzw. Minusanschluß des Zwischenkreises 4 elektrisch verbunden.

Der Dreipunkt-Vierquadranten-Steller 6 besteht aus zwei Phasen 20 und 22, deren Wechselstromanschlüsse mittels einer Primärwicklung des Transformators 8 miteinander verbunden sind. Jede Brückenseite der Phase 20 bzw. 22 dieses Vierquadranten-Stellers 6 besteht aus zwei elektrisch in Reihe geschalteter abschaltbarer Stromrichterventile, denen jeweils eine Freilaufdiode antiparallel geschaltet ist. Als abschaltbare Stromrichterventile sind hier abschaltbare Thyristoren - Gate-Turn-Off-Thyristor GTO - vorgesehen. Der Verbindungspunkt zweier elektrisch in Reihe geschalteter GTO-Thyristoren jeder Brückenseite ist in bekannter Weise jeweils mit einer Entkopplungsdiode mit einer dritten Anschlußklemme 24 des Zwischenkreises 4, auch als Zwischenkreismittenanschluß 24 bezeichnet, elektrisch leitend verbunden.

Zur Erzeugung der Einphasen-Wechselspannung U mit stufenlos veränderliche Amplitude und Frequenz wird die Gleichspannung $U_d$ des Zwischenkreises 4 blockweise auf die Wechselstromanschlüsse des Dreipunkt-Vierquadranten-Stellers 6 durchgeschaltet. Dabei unterscheidet man höherpulsige Taktarten, bei dem sich eine Wechselspannungshalbschwingungen aus mehreren, unterschiedlich langen Spannungsblöcken zusammensetzt und der Vollblock- oder Grundfrequenztaktung bei der pro Halbschwingung nur ein Spannungsblock gebildet wird. Beim Betrieb von GTO-Stromrichtern am Spannungs-Zwischenkreis 4 zur Erzeugung von Wechselspannungssystemen ist zur Minimierung der Stromrichterverluste eine möglichst niedrige Taktfrequenz anzuwenden (Reduzierung der Schaltverluste). Der Einsatz der Vollblocktaktung ist unter diesem Aspekt ideal, da jedes abschaltbare Stromrichterventil der Stromrichter während einer Periode nur einmal ein- und ausgeschaltet wird.

In den Figuren 3 und 4 ist jeweils in einem Diagramm über der Zeit t eine Grundfrequenztaktung einer Phase des Dreipunkt-Vierquadranten-Stellers 6 nach Figur 2 näher dargestellt. Durch diese versetzte Grundfrequenztaktung zweier Phasen ergibt sich eine treppenförmige Ausgangsspannung U mit der gewünschten Grundfrequenz $f_N$, die in einem Diagramm über der Zeit t in der Figur 5 näher dargestellt ist. Die Klemmenspannung kann folgende Werte annehmen: $-U_d$, $-U_d/2$, 0, $U_2/2$, $U_d$. Eine dieser drei Spannungen wird abwechselnd von jeder Phase des Dreipunkt-Vierquadranten-Stellers 6 auf die Wechselspannungsanschlüsse durchgeschaltet. Zur Steuerung der Spannungsamplitude kann die Breite der positiven und negativen Spannungsblöcke variiert werden. Die zunehmende Verzerrung der Ausgangsspannung U bei Verkleinerung der Blockbreiten setzt der Amplitudensteuerung eine natürliche Untergrenze.

Das Durchschalten von Spannungsblöcken führt beim Dreipunkt-Vierquadranten-Steller 6 zu einer blockförmigen Stromentnahme aus dem Zwischenkreis 4 und demzufolge zu Spannungsschwingungen an dem Stützkondensator 26 bzw. 28 des Zwischenkreises 4, der zwischen dem Plusanschluß und dem Zwischenkreismittenanschluß 24 bzw. zwischen dem Zwischenkreismittenanschluß 24 und dem Minusanschluß angeordnet ist. Diese Spannungsschwankungen sollen 5 bis 10 % der Zwischenkreis-Spannung $U_d$ nicht überschreiten, damit die Ausgangsspannung U des Dreipunkt-Vierquadranten-Stellers 6 nicht zu stark verzerrt wird.

Bei der Erzeugung einer einphasigen Wechselspannung U fester Frequenz $f_N$ wird der Zwischenkreis 4 zusätzlich mit der pendelnden Einphasenleistung, die mit doppelter Nennfrequenz $f_N$ schwingt, belastet. Um diese Schwingung weitgehend von den Zwischenkreis-Kondensatoren 26 und 28 fernzuhalten, wird dem Zwischenkreis 4 ein Saugkreis 10 parallelgeschaltet, der auf die doppelte Nennfrequenz $f_N$ abgestimmt ist. Aufgrund von Schwankungen der Einphasenfrequenz und der Bauteiletoleranzen im Saugkreis 10 werden die Zwischenkreis-Kondensatoren 26 und 28 entsprechend des Impedanzverhältnisses zum Saugkreis 10 teilweise mit dieser schwingenden Leistung belastet.

Bei sehr niedrigen Einphasenfrequenzen, beispielsweise 16 2/3 Hz des Bahnnetzes, führt diese Vollblocktaktung zu hohen Welligkeiten der Zwischenkreis-Spannung $U_d$. Speziell durch die halbseitige Belastung der Teilzwischenkreise der Dreipunkt-Schaltung schwingt der Zwischenkreismittenanschluß 24 mit der Einphasengrundfrequenz.

Unter der Annahme, daß die Ausgangsspannung gemäß Figur 5 zum Strom in Phase ist, und der Dreipunkt-Vierquadranten-Steller 6 Leistung an das Einphasennetz liefert, sind in nachfolgender Tabelle

| Intervall | oberer Kondensator | | unterer Kondensator | |
|---|---|---|---|---|
| | Aufladung | Entladung | Aufladung | Entladung |
| $t_1 - t_2$ | | X | X | |
| $t_2 - t_3$ | | | | |
| $t_3 - t_4$ | X | | | X |
| $t_4 - t_5$ | | | | |
| $t_5 - t_6$ | X | | | X |
| $t_6 - t_7$ | | | | |
| $t_7 - t_8$ | | X | X | |

die Zeitintervalle, bei denen der Zwischenkreis 4 einseitig belastet ist, gekennzeichnet. Jedes Kreuz in der dargestellten Tabelle repräsentiert eine einseitige Zwischenkreis-Belastung. Innerhalb der restlichen Zeitintervalle werden beide Zwischenkreis-Kondensatoren 26 und 28 gleich belastet. Bei der einseitigen Zwischenkreis-Belastung wird immer ein Teilkondensator 26 bzw. 28 entladen, während der andere Teilkondensator 28 bzw. 26 geladen wird.

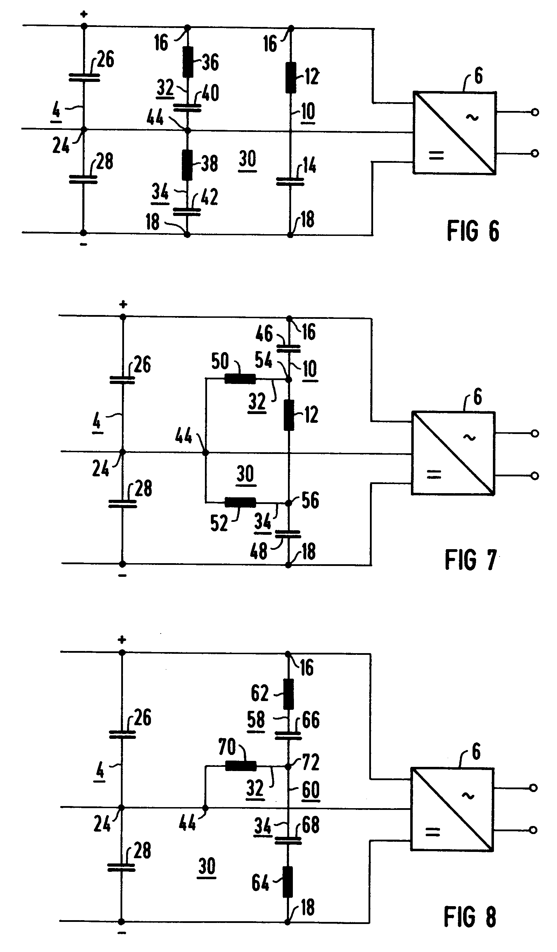

In der Figur 6 ist eine erste Ausführungsform einer erfindungsgemäßen Saugkreis-Schaltungsanordnung

30 dargestellt. Diese Saugkreis-Schaltungsanordnung 30 besteht aus dem bereits beschriebenen Saugkreis 10, der auf die doppelte Nennfrequenz $f_N$ des erzeugten Einphasensystems am Ausgang des Dreipunkt-Vierquadranten-Stellers 6 abgestimmt ist. Dieser Saugkreis 10 wird derartig zu einer Saugkreis-Schaltungsanordnung 30 erweitert, daß elektrisch parallel jeweils zu einem Teilkondensator 26 bzw. 28 des Zwischenkreises 4 ein Teilsaugkreis 32 bzw. 34 geschaltet ist. Dieser Teilsaugkreis 32 bzw. 34 besteht ebenfalls, wie der Saugkreis 10, aus einer Reihenschaltung einer Drossel 36 bzw. 38 und eines Kondensators 40 bzw. 42. Der Verbindungspunkt der beiden Teilsaugkreise 32 und 34 bildet eine dritte Anschlußklemme 44 der Saugkreis-Schaltungsanordnung 30, die direkt mit der dritten Anschlußklemme 24 des Zwischenkreises 4 elektrisch leitend verbunden ist. Somit weist die Saugkreis-Schaltungsanordnung 30 jeweils zwischen zwei Anschlußklemmen 16,18; 16,44 und 18,44 einen Saugkreis 10, 32 und 34 auf, wobei der Saugkreis 10, angeordnet zwischen den Anschlußklemmen 16 und 18, auf die doppelte Nennfrequenz $f_N$ und die Saugkreise 32 und 34, angeordnet zwischen den Anschlußklemmen 16, 44 und 18,44, auf die einfache Nennfrequenz $f_N$ abgestimmt sind.

Die Figur 7 zeigt eine weitere Ausführungsform der Saugkreis-Schaltungsanordnung 30. Bei dieser Ausführungsform der Saugkreis-Schaltungsanordnung 30 ist der Kondensator 14 des Saugkreises 10 für die schwingende Einphasenleistung in zwei Teilkondensatoren 46 und 48 aufgeteilt. Mittig zu diesen beiden Teilkondensatoren 46 und 48 bleibt die Drossel 12 des Saugkreises 10 erhalten. Die dritte Anschlußklemme 44 der Saugkreis-Schaltungsanordnung 30 ist jeweils über eine weitere Drossel 50 bzw. 52 mit einem Verbindungspunkt 54 bzw. 56 des Teilkondensators 46 bzw. 48 und der Drossel 12 verknüpft. Dadurch bildet die Drossel 50 bzw. 52 und der Teikondensator 46 bzw. 48 den Teilsaugkreis 32 bzw. 34. Auch diese Teilsaugkreise 32 und 34 sind jeweils auf die einfache Nennfrequenz $f_N$ abgestimmt. Somit sind ebenfalls jeweils zwischen zwei Anschlußklemmen 16,18; 16,44 und 18,44 der Saugkreis-Schaltungsanordnung 30 ein Saugkreis 10,32 und 34 angeordnet.

Die Figur 8 zeigt eine weitere Ausführungsform der Saugkreis-Schaltungsanordnung 30. Bei dieser Ausführungsform der Saugkreis-Schaltungsanordnung 30 ist der Saugkreis 10 für die schwingende Einphasenleistung in zwei in Reihe geschaltete Saugkreise 58 und 60 aufgeteilt. Jeder Saugkreis 58 bzw. 60 enthält eine Reihenschaltung einer Drossel 62 bzw. 64 und eines Kondensators 66 bzw. 68. Zur Bildung je eines weiteren Teilsaugkreises 32 bzw. 34 für die Grundfrequenz $f_N$ ist die dritte Anschlußklemme 44 der Saugkreis-Schaltungsanordnung 30 über eine weitere Drossel 70 mit dem Verbindungspunkt 72 der beiden Saugkreise 58 und 60 elektrisch leitend verbunden. Somit enthält die Saugkreis-Schaltungsanordnung 30 zwischen seinen Anschlußklemmen 16 und 18 einen Saugkreis 58 und 60, der auf die doppelte Nennfrequenz $f_N$ und jeweils zwischen seinen Anschlußklemmen 16 und 44 bzw. 18 und 44 einen Teilsaugkreis 32 bzw. 34, die jeweils auf die einfache Nennfrequenz $f_N$ abgestimmt sind.

Durch diese erfindungsgemäße Saugkreis-Schaltungsanordnung 30 werden Spannungsschwankungen, insbesondere die Mittelpunktschwingung mit Grundfrequenz, reduziert, ohne dabei den Wert der Zwischenkreiskapazität des Zwischenkreises 4 erhöhen zu müssen. Durch die Verwendung dieser Saugkreis-Schaltungsanordnung 30 bei einer Dreipunkt-Spannungszwischenkreisumrichter-Schaltung kann sogar der Wert der Zwischenkreiskapazität des Zwischenkreises 4 verkleinert werden. Dadurch sind auch im Fehlerfall die auftretenden Kurzschlußströme besser zu beherrschen.

**Patentansprüche**

1.  Saugkreis-Schaltungsanordnung (30) für einen Dreipunkt-Zwischenkreis (4) eines Spannungsumrichters, der einen eingangsseitigen Pulswechselrichter (2) und einen ausgangsseitigen Dreipunkt-Vierquadranten-Steller (6) aufweist, wobei zwischen zwei ersten Anschlußklemmen (16,18) ein Saugkreis (10) geschaltet ist, der aus einer in Reihe geschalteten Drossel (12) und Kondensator (14) besteht, wobei dieser Saugkreis (10) auf eine doppelte Nennfrequenz ($f_N$) eines erzeugten Einphasensystems am Ausgang des Dreipunkt-Vierquadranten-Stellers (6) abgestimmt ist, **dadurch gekennzeichnet,** daß jeweils zwischen einer ersten Anschlußklemme (16,18) und einem Zwischenkreismittenanschluß (24) des Dreipunkt-Zwischenkreises (4) ein Teilsaugkreis (32,34) vorgesehen ist, der jeweils auf die einfache Nennfrequenz ($f_N$) des erzeugten Einphasensystems abgestimmt ist.

2.  Saugkreis-Schaltungsanordnung (30) nach Anspruch 1, **dadurch gekennzeichnet,** daß als Teilsaugkreis (32,34) jeweils eine Reihenschaltung, bestehend aus einer Drossel (36,38) und einem Kondensator (40,42), vorgesehen ist.

3.  Saugkreis-Schaltungsanordnung (30) nach Anspruch 1, **dadurch gekennzeichnet,** daß zwischen einer ersten Anschlußklemme (16,18) und der Drossel (12) des Saugkreises (10) ein weiterer Kondensator

EP 0 534 285 B1

(46,48) angeordnet ist und daß jeweils ein Verbindungspunkt (54,56) der Drossel (12) und des Kondensators (46,48) des Saugkreises (10) mittels einer weiteren Drossel (50,52) mit dem Zwischenkreismittenanschluß (24) verknüpft ist, wobei jeweils die weitere Drossel (50,52) so ausgelegt ist, daß die gebildeten Teilsaugkreises (32, 34) auf die einfache Nennfrequenz (f$_N$) des erzeugten Einphasensystems abgestimmt sind.

4. Saugkreis-Schaltungsanordnung (30) nach Anspruch 1, **dadurch gekennzeichnet,** daß der Saugkreis (10) in zwei Saugkreise (58,60) aufgeteilt ist und daß ein Verbindungspunkt (72) dieser beiden Saugkreise (58, 60) mittels einer weiteren Drossel (70) mit dem Zwischenkreismittenanschluß (24) verknüpft ist, wobei die weitere Drossel (70) so ausgelegt ist, daß die gebildeten Teilsaugkreise (32, 34) auf die einfache Nennfrequenz (f$_N$) des erzeugten Einphasensystems abgestimmt sind.

**Claims**

1. Filter circuit arrangement (30) for a three-point intermediate circuit (4) of a voltage converter which has a pulse inverter (2) on the input side and a three-point four-quadrant controller (6) on the output side, wherein connected between two first connection terminals (16, 18) there is a filter circuit (10) which consists of an inductor (12) and a capacitor (14) which are connected in series, with this filter circuit (10) being tuned to twice the nominal frequency (f$_N$) of a generated single-phase system at the output of the three-point four-quadrant controller (6), characterised in that provided between a first connection terminal (16, 18) and an intermediate circuit central connection (24) of the three-point intermediate circuit (4) there is a respective partial filter circuit (32, 34) which in each case is tuned to the single nominal frequency (f$_N$) of the generated single-phase system.

2. Filter circuit arrangement (30) according to claim 1, characterised in that a respective series circuit arrangement consisting of an inductor (36, 38) and a capacitor (40, 42) is provided as the partial filter circuit (32, 34).

3. Filter circuit arrangement (30) according to claim 1, characterised in that a further capacitor (46, 48) is arranged between a first connection terminal (16, 18) and the inductor (12) of the filter circuit (10) and in that a respective connection point (54, 56) of the inductor (12) and the capacitor (46, 48) of the filter circuit (10) is linked with the intermediate circuit central connection (24) by means of a further inductor (50, 52), with in each case the further inductor (50, 52) being rated so that the partial filter circuits (32, 34), which are formed, are tuned to the single nominal frequency (f$_N$) of the generated single-phase system.

4. Filter circuit arrangement (30) according to claim 1, characterised in that the filter circuit (10) is divided into two filter circuits (58, 60) and in that a connection point (72) of these two filter circuits (58, 60) is linked with the intermediate circuit central connection (24) by means of a further inductor (70), with the further inductor (70) being rated so that the partial filter circuits (32, 34), which are formed, are tuned to the single nominal frequency (f$_N$) of the generated single-phase system.

**Revendications**

1. Montage (30) à circuit résonant série pour un circuit intermédiaire à trois points (4) d'un convertisseur de tension, qui comporte un onduleur à impulsions (2) situé côté entrée et un régulateur à trois points et à quatre quadrants (6) côté sortie, et dans lequel entre deux premières bornes de raccordement (16,18) est branché un circuit résonant série (10), qui est constitué d'une bobine (12) et d'un condensateur (14) branchés en série, ce circuit résonant série (10) étant accordé sur une fréquence égale au double de la fréquence nominale (f$_N$) d'un système monophasé formé, à la sortie du régulateur à trois points et à quatre quadrants (6), caractérisé par le fait qu'il est prévu, respectivement entre une première borne de raccordement (16,18) et une borne médiane (24) du circuit intermédiaire à trois points (4), un circuit résonant série partiel (32,34), qui est accordé respectivement sur une fois la fréquence nominale (f$_N$) du système monophasé formé.

2. Montage (30) à circuit résonant série suivant la revendication 1, caractérisé par le fait qu'il est prévu comme circuit résonant série partiel (32,34) respectivement un circuit série constitué d'une bobine (36,38)

6

et d'un condensateur (40,42).

3.  Montage (30) à circuit résonant série suivant la revendication 1, caractérisé par le fait qu'un autre condensateur (46,48) est disposé entre une première borne de raccordement (16,18) et la bobine (12) du circuit résonant série (10) et que respectivement un point de jonction (54,56) de la bobine (12) et du condensateur (46,48) du circuit résonant série (10) est relié par une autre bobine (50, 52) à la borne médiane (24) du circuit intermédiaire, l'autre bobine (50,52) étant respectivement formée de telle sorte que le circuit résonant série partiel formé (32,34) soit accordé sur une fois la fréquence nominale ($f_N$) du système monophasé formé.

4.  Montage (30) à circuit résonant série suivant la revendication 1, caractérisé par le fait que le circuit résonant série (10) est divisé en deux circuits résonants série (58,60) et qu'un point de jonction (72) de ces deux circuits résonants série (58,60) est relié, par une autre bobine (70), à la borne médiane (24) du circuit intermédiaire, l'autre bobine (70) étant formée de telle sorte que les circuits résonants série partiels formés (32,34) soient accordés sur une fois la fréquence nominale ($f_N$) du système monophasé formé.

**FIG 1**

**FIG 2**

$U_m$ 1.Phase

**FIG 3**

$U_m$ 2.Phase

**FIG 4**

U

**FIG 5**

$t_0$ $t_1$ $t_2$ $t_3$ $t_4$ $t_5$ $t_6$ $t_7$ $t_8$

FIG 6

FIG 7

FIG 8